# EUROPEAN PATENT APPLICATION

(11) **EP 4 361 327 A1**
(43) Date of publication of application: **01.05.2024**
(21) Application number: 23205191.2
(22) Date of filing: 23.10.2023
(51) Int. Cl.: D01G 13/00, B68G 3/00

(54) **ASSEMBLY FOR THE DISTRIBUTION OF MATERIAL FOR PADDINGS, QUILTINGS AND THE LIKE**

(30) Priority: 25.10.2022 IT 202200021951
(71) Applicant: Resta S.r.l., 48018 Faenza (RA) (IT)
(72) Inventor: RESTA, Paolo, 48018 FAENZA RA (IT); RESTA, Roberto, 48018 FAENZA RA (IT)
(74) Representative: Modiano, Micaela Nadia

(57) **Abstract**

An assembly for the distribution of material (A) for paddings, quiltings and the like, which comprises: at least one apparatus (2) for mixing materials (A) for paddings of the type comminuted into small fragments and supplied at its inlet; at least one conveyor element (3) for mixed comminuted materials (A) taken from an outlet (4) of the at least one apparatus (2) for mixing; at least one dispensing head (5) for the mixed comminuted materials (A) supplied by the at least one conveyor element (3), on at least one supporting surface (6) that can be opened; at least one work surface (7) on which at least one ribbon (8) to be quilted can slide. The at least one supporting surface (6) faces and is proximate to the at least one ribbon (8) to be quilted arranged on the at least one work surface (7). Opening the at least one supporting surface (6) determines the release of at least one layer (B), constituted by the mixed comminuted materials (A), onto the at least one ribbon (8).

## Description

The present invention relates to an assembly for the distribution of material for paddings, quiltings and the like.

Quilting is an operation performed on manufactured textiles and is done by coupling together, using stab stitches conveniently arranged and spaced apart, specific fabrics between which batting or padding materials are interposed.

Materials for paddings are generally homogeneous in type and already in the form of sheets or layers in order to facilitate the quilting operations.

This same applicant, with EPAn. 23165589.5, has however identified a technology which allows to recycle all the offcuts of textile material and/or of hides and/or of other raw materials that can be generated by processing in plants for producing clothing, tapestries, mattresses, cushions, armchairs, sofas, seats, funerary items and the like.

Such processing offcuts, conveniently treated according to the teachings of EPA n. 23165589.5, can be used as material for padding.

In such case however, the material for padding will be particularly non-uniform and the corresponding distribution will be a particularly complicated operation.

For this reason, in apparatuses produced up to now, the distribution of the recycled material to be used as padding is done by an operator.

Unfortunately this determines a considerable increase in the running costs of the plant, which renders it disadvantageous compared to using new padding material (which, being already provided in sheets or layers, can be handled on fully automatic machines).

Furthermore, the operator might not ensure a sufficiently careful distribution, with consequent irregularities in the finished products (the quilted fabrics), which might not meet the associated application requirements.

The aim of the present invention is to solve the above-mentioned drawbacks, by providing an assembly for the distribution of material for paddings, quiltings and the like that is adapted to operate on material for paddings obtained by recycling processing offcuts.

Within this aim, an object of the invention is to provide an assembly for the distribution of material for paddings, quiltings and the like that does not require the presence of an operator.

Another object of the invention is to provide an assembly for the distribution of material for paddings, quiltings and the like that ensures the formation of layers of material for paddings that have specific controllable volume.

Another object of the invention is to provide an assembly for the distribution of material for paddings, quiltings and the like that ensures the formation of layers of material for paddings that have specific controllable weight.

Another object of the invention is to provide an assembly for the distribution of material for paddings, quiltings and the like that is reconfigurable and modular.

Another object of the present invention is to provide an assembly for the distribution of material for paddings, quiltings and the like that is of low cost, easily and practically implemented, and safe in use.

This aim and these objects are achieved by an assembly for the distribution of material for paddings, quiltings and the like, characterized in that it comprises:
- at least one apparatus for mixing materials for paddings of the type comminuted into small fragments and supplied at its inlet,
- at least one conveyor element for mixed comminuted materials taken from an outlet of said at least one apparatus for mixing,
- at least one dispensing head for said mixed comminuted materials supplied by said at least one conveyor element, on at least one supporting surface that can be opened,
- at least one work surface on which at least one ribbon to be quilted can slide, said at least one supporting surface facing and being proximate to said at least one ribbon to be quilted arranged on said at least one work surface, the opening of said at least one supporting surface causing the release of at least one layer, constituted by said mixed comminuted materials, onto said at least one ribbon.

Further characteristics and advantages of the invention will become better apparent from the detailed description that follows of a preferred, but not exclusive, embodiment of the assembly for the distribution of material for paddings, quiltings and the like, which is illustrated by way of nonlimiting example in the accompanying drawings wherein:

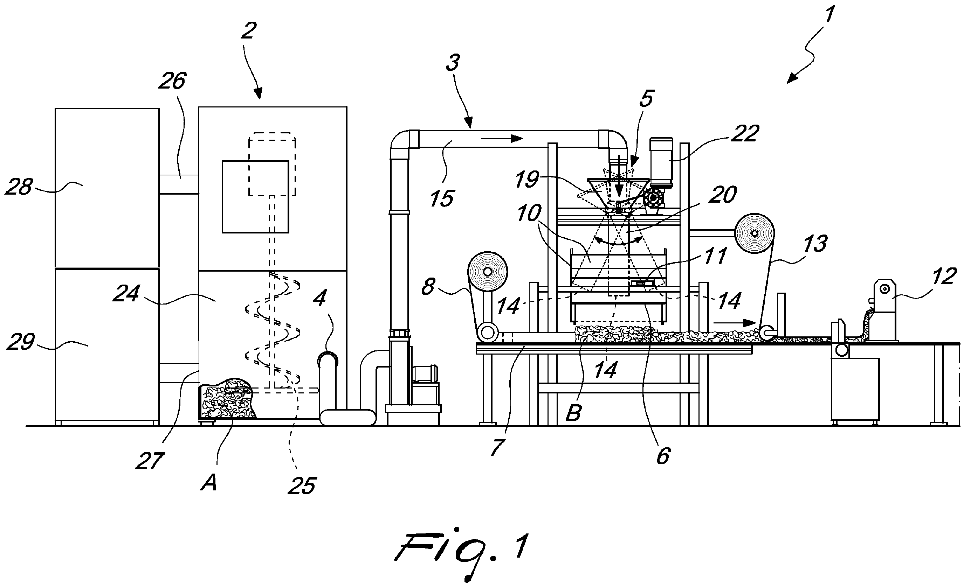

Figure 1 is a schematic side view of a possible embodiment of an assembly for the distribution of material for paddings, quiltings and the like according to the invention;

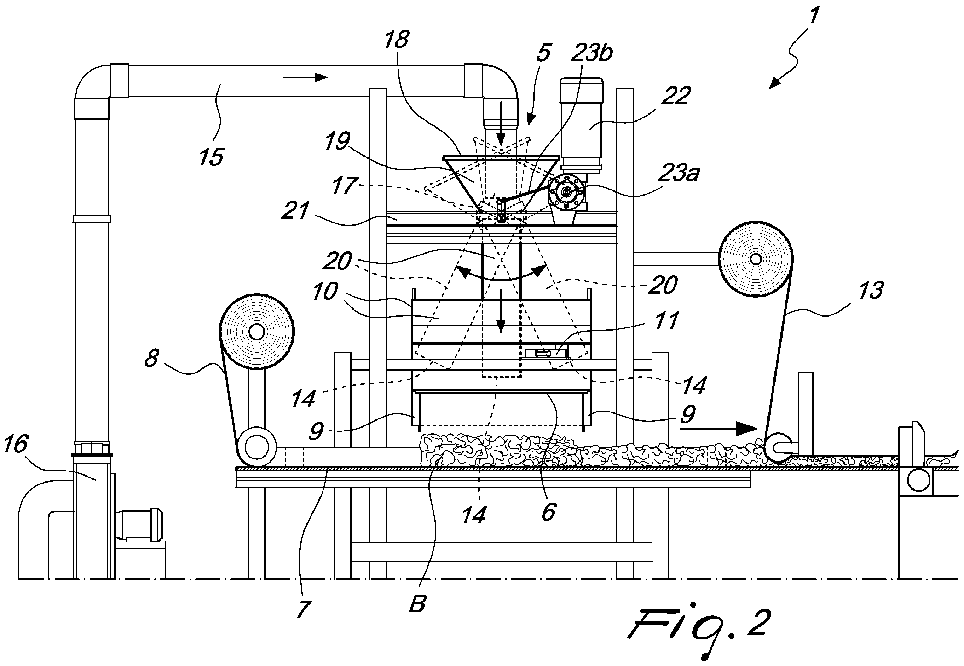

Figure 2 is an enlarged view of Figure 1.

With particular reference to the figures, the reference numeral 1 generally designates an assembly for the distribution of material for paddings, quiltings and the like.

The assembly 1 according to the invention advantageously comprises at least one apparatus 2 for mixing materials A for paddings of the type comminuted into small fragments and supplied at its inlet.

In particular the materials can be of the type of fabrics, paddings, fibers, hides and the like, conveniently processed mechanically in order to convert them to a fragment of low mass and suitable to occupy a large volume, thus being perfectly suitable for constituting a padding.

Given the kind of materials A handled by the assembly 1, the presence of the at least one apparatus 2 for mixing them plays a key role in that it makes it possible to homogenize such materials A: given the small dimensions of the fragments, in fact, thoroughly mixing them ensures that they are distributed evenly throughout the volume, thus ensuring that the materials A used in the subsequent operating steps by the assembly 1 have constant physical and geometric characteristics.

The assembly 1 according to the invention further comprises conveniently at least one conveyor element 3 which is designed to move (transfer) such comminuted and mixed materials A, taking them from an outlet 4 of the at least one mixing apparatus 2.

The assembly 1 according to the invention is furthermore provided with at least one dispensing head 5 of the comminuted and mixed materials A; such materials A will be fed to the head 5 through the at least one conveyor element 3. The dispensing head 5 will distribute the materials A that it receives onto at least one supporting surface 6 that can be opened.

The assembly 1 according to the invention finally comprises at least one work surface 7 on which at least one ribbon 8 to be quilted can slide. The at least one supporting surface 6 faces and is proximate to such at least one ribbon 8 to be quilted arranged on the at least one work surface 7.

Opening the at least one supporting surface 6 will determine the release of at least one layer B constituted by such mixed comminuted materials A, onto the at least one ribbon 8.

In particular, the surface 6 will comprise at least one openable partition 9 and, constituting the base onto which the dispensing head 5 distributes the materials A, opening the at least one partition 9 will result in the release of the entire quantity of materials A deposited by the head 5 up to that moment.

The supporting surface 6 will be delimited between lateral walls 10 which will make it possible to confine the dispensed materials A, by defining a chamber for preparing the layer B to be released (following the opening of the at least one partition 9) onto the ribbon 8.

Such chamber for preparing the layer B (defined by the resting surface 6 and by the associated lateral walls 10) can be installed on a load cell 11 for the purpose of detecting the weight of the deposited materials A.

By virtue of the load cell 11, it will be possible to ensure that a layer B always having the same weight will be deposited on the ribbon 8, thus ensuring the constancy of the characteristics of the layer B (also in light of the subsequent quilting operation using a specific sewing machine 12).

The possibility is not ruled out of installing level sensors on at least one of the lateral walls 10: by virtue of such sensors it will be possible to detect the volume of material introduced (and optionally also the correctness of its distribution along the surface 6). The partitions 9, in this case, are opened only when an appropriate level of the materials introduced is reached and detected, thus ensuring that a layer B that always has the same volume will be deposited on the ribbon 8, so ensuring the constancy of the characteristics of the layer B (also in light of the subsequent quilting operation using a specific sewing machine 12).

In particular a second ribbon 13 will be arranged above the layer B: in this manner, the second ribbon 13 will arrive at the sewing machine 12 overlaid on the first ribbon 8 and the layer B, and the machine 12 can sew all these together according to a predefined pattern.

It should be noted that the advancement of the ribbons 8 and 13 will be with intermittent motion or at low speed: in this manner, once a layer B is deposited on the ribbon 8, it will be advanced by a length equal to the length of the layer B. In this manner, when a new layer B is deposited, it will be contiguous with the layer deposited previously, and the material A will be deposited on the ribbon 8 seamlessly.

It should be noted that the dispensing head 5 can profitably be associated with a respective actuator configured to move a respective dispensing port 14 with an alternating motion while keeping it facing the supporting surface 6 and at at least a predetermined distance therefrom.

The at least one conveyor element 3 for mixed comminuted materials A comprises at least one duct 15 affected by forced ventilation means 16.

Such at least one duct 15 comprises a respective outlet opening 17 which faces and is proximate to an inlet window 18 of the dispensing head 5.

With particular reference to an embodiment of undoubted practical and applicative interest, the dispensing head 5 can advantageously comprise a tub 19 provided with a lower tube 20 which comprises the terminal dispensing port 14.

The upper rim of such tub 19 faces and is proximate to the outlet opening 17 of the duct 16, thus delimiting the inlet window 18.

It should be noted that the tub 19 can usefully be pivoted to a supporting frame 21 and positively be functionally associated with an actuator designed to oscillate it with an alternating motion with respect to the pivoting axis.

With particular reference to the embodiment shown by way of nonlimiting example in the accompanying figures, the actuator can conveniently comprise a gear motor 22 associated with a crank 23a pivoted to a linkage 23b hinged on the tub 19: the rotary motion of the gear motor 21 will thus be converted to an alternating motion that will determine the oscillation of the tub 19 and of the tube 20 below it.

Such oscillation will ensure an ideal distribution of the materials A onto the surface 6.

The possibility is not ruled out of the outlet opening 17 of the duct 16 being connected to a flexible pipe, in a different embodiment of the dispensing head 5. In such case, the flexible pipe could be made integral with a trolley that can move with an alternating motion at a predefined distance from the surface 6, so that the outlet of the pipe translates above the surface 6, in so doing distributing the materials A uniformly thereon.

It should be noted that the tub 19 can have inclined lateral walls which converge toward a base face to which the lower tube 20 is coupled. By taking advantage of the fluid-dynamic properties of a convergent-divergent conduit, this configuration will make it possible to slow the flow of the materials A coming from the duct 15, so that they can be deposited through the dispensing head 5 without being dispersed into the environment. It must be remembered that the comminuted materials A are constituted by small fragments of very low specific weight, which therefore could remain in suspension in the air if they are blown with sufficient force toward the surface 6.

The dispensing port 14 will conveniently be arranged at a predefined distance from the supporting surface 6: in this manner the alternating movement of the dispensing port 14 will distribute the comminuted materials A dispensed onto the surface 6. In practice, that is to say, the dispensing port 14, by brushing up against the materials A already deposited on the surface 6, will move them, so as to favor a distribution thereof that is as even as possible along the surface 6.

To this end, the possibility is not ruled out of providing the dispensing port 14 with an end edge made of a deformable material (such as for example an elastomeric collar, or a fabric collar, or the like), which will apply a mechanical action to the materials A already deposited of limited but sufficient extent to determine the movement of small quantities of materials A from one position to another along the surface 6.

The at least one apparatus 2 for mixing materials A for paddings of the type comminuted into small fragments can profitably comprise a main tank 24 provided with at least one movable element 25 of the type of a propeller, a fan, a rotating band, an oscillating band and the like for mixing the materials A that are present inside the tank 24.

The tank 24 comprises at least one inlet 26, 27, associated with a component chosen among a storage unit 28 for accumulating material A, and an outlet port of a comminutor 29.

The tank further comprises at least one outlet 4 connected to a respective duct 15 affected by forced ventilation means 16 of a respective conveyor element 3.

The comminutor 29 will be configured to reduce materials supplied at its inlet to small fragments, and it can be chosen among conventional devices, which operate using respective blades (or hammers, or grinders, or equivalent utensils) which can be rotationally actuated or actuated with alternating motion. According to the operating speed of the utensils, and the time that the products remain inside the comminutor 29, fragments of different dimensions can be obtained.

It should be noted that, according to the invention, it is preferable for the comminutor 29 to be configured to fray the materials inserted in it as well, so as to convert them to a fragment of low mass and suitable to occupy a large volume (precisely because it has been frayed).

Advantageously the present invention solves the above-mentioned problems, by providing an assembly 1 for the distribution of material for paddings, quiltings and the like that is adapted to operate on material for paddings obtained by recycling processing offcuts.

Conveniently the assembly 1 according to the invention does not require the presence of an operator, since it can operate completely automatically.

Advantageously the assembly 1 according to the invention ensures the formation of layers B of material A for paddings that have specific controllable volume.

Profitably the assembly 1 according to the invention ensures the formation of layers B of material A for paddings that have specific controllable weight.

The assembly 1 according to the invention is advantageously reconfigurable and modular: in fact the tank 24 can have a plurality of outlets (not just the outlet 4) and, through them, it can feed an undetermined number of conveyor elements 3 which, in turn, will make it possible for respective dispensing heads 5 to distribute layers B of materials A onto a corresponding ribbon 8: the ribbon 8 and the layer B will be overlaid by a second ribbon 13 and quilted using the sewing machine 12 which will produce the end product. In this manner the assembly 1 can simultaneously produce a plurality of finished products, which, in conformance with the characteristics of the respective ribbons 8 and 13 and of the respective sewing machines 12, can also have a different width and/or a different thickness (and/or specific volume and/or specific weight) of the respective layer B.

Positively the assembly 1 according to the invention is relatively easily and practically implemented and is of low cost: such characteristics make the assembly 1 according to the invention an innovation that is safe in use.

The invention thus conceived is susceptible of numerous modifications and variations, all of which are within the scope of the appended claims. Moreover, all the details may be substituted by other, technically equivalent elements.

Upstream of the sewing machine 12 it is possible to have a tufting machine which, by means of a vertical movement of respective needles, compacts the layer B between the two ribbons 8 and 13, rendering these three components mutually integral.

In the embodiments illustrated, individual characteristics shown in relation to specific examples may in reality be interchanged with other, different characteristics, existing in other embodiments.

In practice, the materials employed, as well as the dimensions, may be any according to requirements and to the state of the art.

The disclosures in Italian Patent Application No. 102022000021951 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An assembly for the distribution of material (A) for paddings, quiltings and the like, **characterized in that** it comprises:
- at least one apparatus (2) for mixing materials (A) for paddings of the type comminuted into small fragments and supplied at its inlet,
- at least one conveyor element (3) for mixed comminuted materials (A) taken from an outlet (4) of said at least one apparatus (2) for mixing,
- at least one dispensing head (5) for said mixed comminuted materials (A) supplied by said at least one conveyor element (3), on at least one supporting surface (6) that can be opened,
- at least one work surface (7) on which at least one ribbon (8) to be quilted can slide, said at least one supporting surface (6) facing and being proximate to said at least one ribbon (8) to be quilted arranged on said at least one work surface (7), the opening of said at least one supporting surface (6) causing the release of at least one layer (B), constituted by said mixed comminuted materials (A), onto said at least one ribbon (8).

2. The assembly according to claim 1, **characterized in that** said dispensing head (5) is associated with a respective actuator configured to move a respective dispensing port (14) with an alternating motion while keeping it facing said supporting surface (6) and at at least a predetermined distance therefrom.

3. The assembly according to claim 1, **characterized in that** said at least one conveyor element (3) for mixed comminuted materials (A) comprises at least one duct (15) affected by forced ventilation means (16).

4. The assembly according to claim 3, **characterized in that** said at least one duct (15) comprises a respective outlet opening (17) which faces and is proximate to an inlet window (18) of said dispensing head (5).

5. The assembly according to one or more of the preceding claims, **characterized in that** said dispensing head (5) comprises a tub (19) provided with a lower tube (20) comprising a terminal dispensing port (14), the upper rim of said tub (19) facing and being proximate to said outlet opening (17), delimiting said inlet window (18).

6. The assembly according to the preceding claim, **characterized in that** said tub (19) is pivoted to a supporting frame (21) and is functionally associated with an actuator configured for its alternating oscillation with respect to the pivoting axis.

7. The assembly according to one or more of the preceding claims, **characterized in that** said tub (19) has inclined lateral walls which converge toward a base face to which said lower tube (20) is coupled.

8. The assembly according to one or more of the preceding claims, **characterized in that** said dispensing port (14) is arranged at a predefined distance from said supporting surface (6), the alternating movement of said dispensing port (14) distributing the comminuted materials (A) dispensed on said surface (6).

9. The assembly according to one or more of the preceding claims, **characterized in that** said at least one apparatus (2) for mixing materials (A) for paddings of the type comminuted into small fragments comprises a main tank (24) provided with at least one movable element (25) of the type of a propeller, a fan, a rotating band, an oscillating band and the like for mixing said materials (A) for paddings of the type comminuted into small fragments present inside said tank (24).

10. The assembly according to the preceding claim, **characterized in that** said tank (24) comprises at least one inlet (26, 27), associated with a component selected among a storage unit (28) for accumulating materials (A) for paddings, of the type comminuted into small fragments, and an outlet port of a comminutor (29), and at least one outlet (4) connected to a respective duct (15) affected by forced ventilation means (16) of a respective conveyor element (3).
